# EUROPEAN PATENT APPLICATION

(11) **EP 4 733 614 A1**
(43) Date of publication of application: **29.04.2026**
(21) Application number: 25207600.5
(22) Date of filing: 08.10.2025
(51) Int. Cl.: F16C 19/38, F16C 33/48, F16C 33/49, F16C 23/08, F16C 19/50

(54) **MULTI-ROW ROLLING BEARING**

(30) Priority: 22.10.2024 DE 102024210175
(71) Applicant: Aktiebolaget SKF, 415 50 Göteborg (SE)
(72) Inventor: Persson, Mats, 1182 CT Amstelveen (NL); Zang, Christian, 97334 Nordheim (DE)
(74) Representative: Kuhstrebe, Jochen

(57) **Abstract**

Disclosed is a multi-row rolling bearing comprises an inner ring and an outer ring, wherein the inner ring and the outer ring form at least a first raceway and a second raceway, and a first set of rolling elements arranged at the first raceway of the inner and the outer ring, and a second set of rolling elements arranged at the second raceway of the inner ring and outer ring. The first set of rolling elements comprises a first number of rolling elements and the second set of rolling elements comprises a second number of rolling elements, wherein the first number of rolling elements is different from the second number of rolling elements.

## Description

### Technical field of the invention

The present invention relates to a multi-row rolling bearing according to claim 1.

### Background of the invention

Rolling element bearings are well-known mechanical components used to, e.g., support a rotating shaft or the like. There exist numerous types of rolling bearings, such as radial rolling bearings which are used to mainly support radial loads, axial rolling bearings which are used to mainly support axial loads, and also rolling bearings which are used to support a combination of radial and axial loads. In applications like wind turbines, bearings may need to support both radial loads, which act perpendicular to the shaft, and axial loads, which act parallel to the shaft. Often, bearings with multiple rows of rolling elements are used in wind turbine applications, which are capable of supporting higher loads experienced in the wind turbines.

Multi-row bearings may comprise an inner ring, an outer ring, and at least two sets of rolling elements, such as spherical roller, cylindrical, or tapered rollers, arranged between the inner ring and the outer ring. The rolling elements may be accommodated in a cage.

Despite their advantages, multi-row bearings are expensive to manufacture due to multiple sets of rolling elements. This is particularly true in wind turbine applications, where the production cost is already high.

It is therefore object of the present invention to provide a multi-row rolling bearing which is applicable to wind turbine, but also has less manufacturing cost.

### Summary of the invention

This object is solved by a multi-row rolling bearing according to claim 1.

In the following, a multi-row rolling bearing is provided. Such a multi-row-rolling bearing may be used in application cases where a high thrust load predominantly acts in one direction together with a radial load. Such an application may be for example a wind turbine. The multi-row rolling bearing comprises at least an inner ring and an outer ring, wherein the inner ring and the outer ring form at least a first raceway and a second raceway, and a first set of rolling elements is arranged at the first raceway of the inner ring and the outer ring, and a second set of rolling elements is arranged at the second raceway of the inner ring and the outer ring.

In multi-row rolling bearings, usually one side is less loaded than the other side. As the bearing needs to be adapted to the requirements of the higher load, the side which is less loaded is kind of "oversized". Even if this usually does not pose a problem in small bearings, the cost of large-scale bearings which are used in wind turbine applications is unduly measured. Therefore, to overcome this issue of high manufacturing costs for multi-row rolling bearings, the herein described multi-row rolling bearing is adapted to the actual loads being applied to both sides of the bearing. For that it is suggested that the first set of rolling elements comprises a first number of rolling elements and the second set of rolling elements comprises a second number of rolling elements, wherein the first number of rolling elements is different from the second number of rolling elements. For instance, the first number of rolling elements of the first set of rolling elements may be adapted based on the operational conditions such as load level. Therefore, the first set of rolling elements may specifically support the applied loads and may not comprise more rolling elements than necessary. Thus, by adjusting the number of rolling elements based on, for example, load level, the material and manufacturing costs can be reduced without compromising the safety and reliability of the bearings. For example, the ratio of the first number of rolling elements and the second number of rolling elements may be between 0.8:1 and 0.2:1, in particular between 0.7:1 and 0.33:1.

The first set of rolling elements and the second set of rolling elements are preferably identical to each other with respect to their shape and configuration and differ only with respect to their number. That means that the dimensions of the rolling elements of the first set and the second set are identical. Thus, also the raceways for the first and the second set of rolling elements are formed identical to each other.

The first set of rolling elements and the second set of rolling elements may be arranged between a common, shared inner ring and a common, shared outer ring. Alternatively, one of the inner ring and the outer ring may be formed as a split ring.

Preferably, the bearing comprises a higher loaded side and a lower loaded side, wherein the higher loaded side receives a greater operational load compared to the lower loaded side and is thus configured to support a higher load capacity when in use. In contrast, the lower loaded side configured to support a lower load capacity when in use. For example, the higher loaded side of the bearing is where most of the forces (radial, axial, or a combination of both) are applied, and the lower loaded side of the bearing is where minimal to no significant force is applied. For instance, in applications like wind turbines with shaft inclination, the gravitational forces, i.e., mass loads, create additional bending moments and loads on the shaft, which in turn adds more load to the side of the bearing proximal to the shaft compared to the bearing side distal to the shaft. Thus, in applications like wind turbines, the bearing may be applied with higher loads on one side and lower loads on the other side.

For example, the ratio of the load rating (C-value) of the first set of rolling elements and the second set of rolling elements may be between 0.8:1 and 0.4:1, preferably between 0.76:1 and 0.44:1. The load ratio between the first and the second set with respect to an average load based on revolutions per load case may be in the range of 1:4 to 1:9, preferably of 1:5 to 1:8. In addition, the first set of rolling elements may be typically only loaded 1/3 to 1/2 of the total revolutions during the machine lifetime.

In a specific configuration, for example, the lower loaded side may experience a radial load of about 470 kN and an axial load of about 100 kN whereas the higher loaded side may experience a radial load of about 2600 kN and an axial load of about 860 kN. These weighted average loads are based on revolutions per load case. However, it should be noted that the magnitudes and relations depend on and will vary for bearing size and machine design and the mentioned loads are just a specific example for a specific use case.

It should be further noted that future larger bearing designs might have load levels up to (and maybe above) twice the ones stated above. The ratios between the load levels of the first set and the second set may also shift depending on future machine designs.

According to an embodiment, the first set of rolling elements is arranged at the lower loaded side, and the second set of rolling elements is arranged at the higher loaded side, wherein the first number of rolling elements in the first set of rolling elements is smaller compared to the second number of rolling elements in the second set of rolling elements. The first set of rolling elements arranged on the lower loaded side of the bearing may require fewer rolling elements than the second set of rolling elements arranged on the higher loaded side of the bearing to support the respective operational load. If both sets of rolling elements have the same number of rolling elements, then the cost spent on the first set of rolling elements, which would have more rolling elements than needed, would unnecessarily increase the manufacturing costs. Thus, by providing only a number of rolling elements which is required to support the applied load, the manufacturing costs can be reduced while still balancing the applied operational load.

Further as already mentioned above, the bearing may include multiple sets of rolling elements, each designed to handle specific loads. Preferably, the number of rolling elements in each set may differ to support the actual load being applied to the respective side of the bearing. For instance, in a wind turbine, the side of the bearing facing high axial loads from the rotor blades may require a greater number of rolling elements than the other side. Thus, the set of rolling elements arranged in the bearing to support the high axial loads may have a higher number of rolling elements than the other sets of rolling elements within the same bearing. This has the advantage of effectively supporting the loads in the bearing while reducing manufacturing costs.

According to a further embodiment, the bearing further comprises at least one cage to guide and accommodate the first and the second set of rolling elements. The cage may be coaxially arranged between the inner ring and the outer ring and is provided with a number of pockets intended to guide and accommodate the first set of rolling elements and the second set of rolling elements along the circumference of the first and the second raceways.

According to a further embodiment, the bearing comprises two separate cages, i.e., comprises a first cage and a second cage. Each cage comprises either one cage ring or comprises two cage rings, i.e., a first cage ring and a second cage ring spaced apart from the first cage ring in an axial direction. Each cage further comprises a plurality of cage bars extending from the one cage ring or between the first cage ring and the second cage ring and forming a number of pockets. The plurality of cage bars may extend substantially axially or may extend axially and radially, for example in a curved way. The first cage comprises a first number of pockets for guiding and accommodating the first number of rolling elements of the first set of rolling elements and the second cage comprises a second number of pockets for guiding and accommodating the second number of rolling elements of the second set of rolling elements. This has the advantage that the bearing can be provided with multiple cages for guiding and accommodating multiple set of rolling elements.

According to a further embodiment, the first number of pockets is identical to the second number of pockets, wherein the first number of rolling elements of the first set of rolling elements is different from the first number of pockets in the first cage. The second number of rolling elements of the second set of rolling elements is equal to the second number of pockets in the second cage. By providing an equal number of pockets in both the first and the second cage, the same design may be used for both cages, facilitating production and reducing production costs. Further, the equal number of pockets between the cages allows flexibility in the arrangement of rolling elements. For instance, the first cage may have a higher number of pockets than rolling elements, allowing a flexible arrangement of the first number of rolling elements in the first number of pockets in the first cage.

The first number of rolling elements of the first set of rolling elements may be distributed across the first number of pockets in the first cage so that some of the pockets are empty. For example, some of the first number of rolling elements may be arranged consecutively, i.e., may be arranged in random groups or the rolling elements may be arranged randomly in the first number of pockets. In another example, all of the first number of rolling elements may be arranged in the pockets on one side of the first cage while the pockets on the other side of the first cage remain empty.

In particular, the first number of rolling elements of the first set of rolling elements may be evenly distributed across the first number of pockets in the first cage. For instance, the first number of rolling elements may be arranged at every second pocket in the first cage, leaving every second pocket empty. This creates a more even distribution compared to a random arrangement.

The first and second cages can be adjusted to guide and accommodate a specific number of rolling elements by adjusting the number of pockets in each cage. Thus, adjusting the number of pockets to accommodate specific set of rolling elements can simplify the cage design and assembly process, mainly when multiple cages are used within a bearing.

According to a further embodiment, the first number of pockets in the first cage is different from the second number of pockets in the second cage. For instance, the first cage may have a first number of pockets equal to the first number of rolling elements of the first set of rolling elements, so that every pocket of the first cage accommodates a rolling element of the first number of rolling elements of the first set of rolling elements, similar to the second cage.

As explained above, each cage has a plurality of cage bars, wherein the space between two adjacent cage bars forms a pocket. According to an embodiment, the width of the cage bars of the first cage in the circumferential direction is different from the width of the cage bars of the second cage in the circumferential direction. Thus, the number of pockets formed in the cage can be adjusted by modifying the configuration of the cage bars. For instance, increasing the width of a cage bar will increase the distance between two adjacent pockets, which in turn decreases the number of pockets formed. Thus, by widening the width of the cage bars in the first cage compared to that in the second cage, the first number of pockets formed in the first cage can be reduced. Therefore, the size of the first cage may be kept equal to the size of the second cage, while accommodating a different number of rolling elements than the second cage.

According to a further embodiment, the first cage comprises a plurality of cage bars between two adjacent pockets. In other words, instead of increasing the width of the cage bar between two adjacent pockets, a plurality of cage bars can be formed between two adjacent pockets to widen the distance between them, resulting in a smaller number of pockets in the first cage than in the second cage. This also allows both cages to maintain the same size while being configured to accommodate the respective number of rolling elements.

According to a further embodiment, the bearing comprises a joint cage for guiding and accommodating the rolling elements of both the first set and the second set of rolling elements. The cage comprises a first cage ring, a second cage ring spaced apart from the first cage ring in an axial direction, a third cage ring positioned along a central axis between the first and second cage rings, a plurality of cage bars extends between the first and third cage rings, forming a first number of pockets for guiding and accommodating the first set of rolling elements, and a plurality of cage bars extends between the second and third cage ring, forming a second number of pockets for guiding and accommodating the second set of rolling elements. The plurality of cage bars may extend substantially axially or may extend axially and radially, for example in a curved way.

Thus, having only one cage accommodating two sets of rolling elements provides an easy manufacturing process. Instead of comprising the first cage ring, the second cage ring and the third cage ring, the joint cage may also consist only of the third cage ring positioned along a central axis between the first and the second set of rolling elements, wherein a plurality of cage bars extends from the third cage ring forming a first number of pockets for guiding and accommodating the first set of rolling elements, and a plurality of cage bars extends from the third cage ring, forming a second number of pockets for guiding and accommodating the second set of rolling elements. The plurality of cage bars may extend substantially axially or may extend axially and radially, for example in a curved way.

According to an embodiment, the first number of pockets is identical to the second number of pockets, wherein the first number of rolling elements of the first set of rolling elements is different from the first number of pockets. The second number of rolling elements of the second set of rolling elements is equal to the second number of pockets. A single cage with an equal number of pockets for each set of rolling elements provides the possibility to accommodate various sets of rolling elements with different numbers of rolling elements. Thus, such a cage offers flexibility in arranging the rolling elements in the pockets.

According to a further embodiment, the first number of rolling elements of the first set of rolling elements is distributed across the first number of pockets so that some of the pockets are empty, wherein preferably the first number of rolling elements of the first set of rolling elements is evenly distributed across the first number pockets. For example, the first number of rolling elements may be evenly arranged, for example at every second pocket between the first and third rings or may be randomly, for example arranged with some of the first number of rolling elements in a randomly grouped.

Further, the first set of rolling elements arranged in the first number of pockets may be aligned with the second set of rolling elements in the second number of pockets. Alternatively, the first set of rolling elements may be offset with respect to the second set of rolling elements.

According to a further embodiment, the first number of pockets is different from the second number of pockets, wherein preferably every pocket of the first number of pockets accommodates a rolling element of the first number of rolling elements of the first set of rolling elements. Thus, the cage may be provided with a number of pockets corresponding to the first and the second sets of rolling elements, respectively.

Further, as mentioned above with reference to having two single cages, the number of pockets can be adapted by configuring the cage bars. For example, the width and arrangement of the cage bars between the first and third rings may be adjusted to change the number of pockets formed.

For example, the width of the cage bars between the first number of pockets may be different from the width of the cage bars between the second number of pockets. That is, by increasing the width of the cage bar, the distance between the adjacent pockets can be increased, thereby the number of pockets can be reduced.

According to a further embodiment, a plurality of cage bars is provided between two adjacent pockets of the first number of pockets. That is, by providing multiple cage bars consecutively between the adjacent pockets, the distance between the adjacent pockets can be increased rather than increasing the width of the cage bar.

It should be noted that the embodiment and features described with respect to two separate cages also apply mutatis mutandis to the embodiments having one joined cage.

According to further aspect, a bearing arrangement for a wind turbine is provided. The bearing arrangement preferably comprises a muti-row rolling bearing as described above.

Further preferred embodiments are defined in the dependent claims as well as in the description and the figures. Thereby, elements described or shown in combination with other elements may be present alone or in combination with other elements without departing from the scope of protection.

### Brief description of the drawings

In the following, preferred embodiments of the invention are described in relation to the drawings, wherein the drawings are exemplarily only, and are not intended to limit the scope of protection. The scope of protection is defined by the accompanied claims, only.

The figures show:
Fig. 1: a perspective view of a multi-row rolling bearing assembly;
Fig. 2: a schematic plan view of a detail of the bearing assembly of Fig.1 having two separate cages with identical numbers of pockets;
Fig. 3: a schematic plan view of a detail of the bearing assembly of Fig.1 having two separate cages with different numbers of pockets;
Fig. 4: a schematic plan view of a detail of the bearing assembly of Fig.1 having two separate cages with multiple cage bars;
Fig. 5: a schematic plan view of a detail of the bearing assembly of Fig.1 having a single joint cage with identical numbers of pockets;
Fig. 6: a schematic plan view of a detail of the bearing assembly of Fig.1 having a single joint cage with different numbers of pockets.

### Detailed description of the invention

In the following same or similar functioning elements are indicated with the same reference numerals.

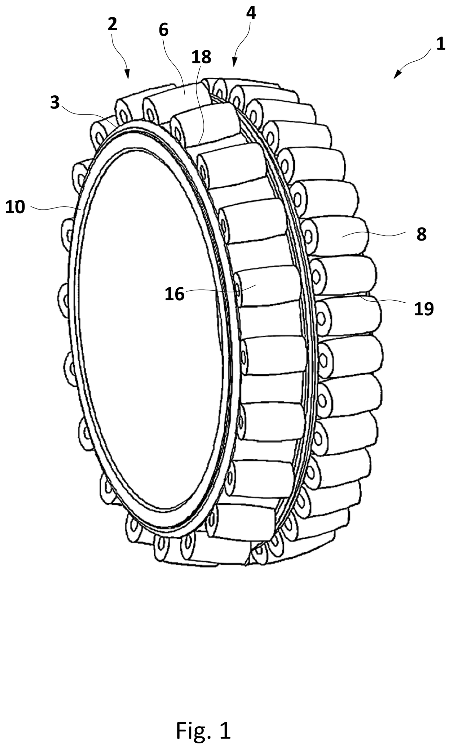

Fig. 1 shows a multi-row rolling bearing 1 that comprises an inner ring 10 and an outer ring (not shown). Rolling elements 2, 4 are arranged between the inner ring 10 and the outer ring. In particular, the inner ring 10 and the outer ring each form a first raceway and a second raceway (not shown), and the first set of rolling elements 2 is arranged at the first raceway of the inner ring 10 and the outer ring, and the second set of rolling elements 4 is arranged at the second raceway of the inner ring 10 and the outer ring.

In multi-row rolling bearings, one side is typically less loaded than the other side. For instance, in wind turbine applications, the side of the bearing 1 supporting the rotor may experience less loads compared to the side of the bearing 1 supporting the gearbox. However, to adapt to the high loads, such as from the gearbox, the less loaded side of the bearing is somewhat "oversized," with a size similar or identical to that of the higher loaded side. This results in high manufacturing costs for multi-row rolling bearings.

Thus, to address the high manufacturing cost challenges in multi-row rolling bearings, in the herein described multi-row rolling bearing 1 the first set of rolling elements 2 comprise a first number of rolling elements 6 and the second set of rolling elements 4 comprise a second number of rolling elements 8. The first set of rolling elements 2 and the second set of rolling elements 4 are provided based on the operational conditions such as load level. For example, if the first set of rolling elements 2 are arranged on the less loaded side, it may be provided with fewer rolling elements than the second set of rolling elements 4 arranged on the high loaded side of the bearing 1 to support the respective operational load, as shown in Fig. 1. Thus, by providing a necessary number of rolling elements that is enough to support the applied loads, the material cost of rolling elements can be reduced, thereby reducing overall manufacturing costs of the bearing 1.

The bearing 1 also comprises a cage 3 that keeps the first set of rolling elements 2 and the second set of rolling elements 4 spaced from each other, thereby preventing them from making contact. The cage 3 is arranged coaxially between the inner ring 10 and the outer ring (not shown) in bearing 1 and comprises a number of pockets 18, 19 disposed in rows. The pockets 18, 19 are intended to guide and accommodate a rolling element 6, 8 of the first set 2 and second set 4 of rolling elements.

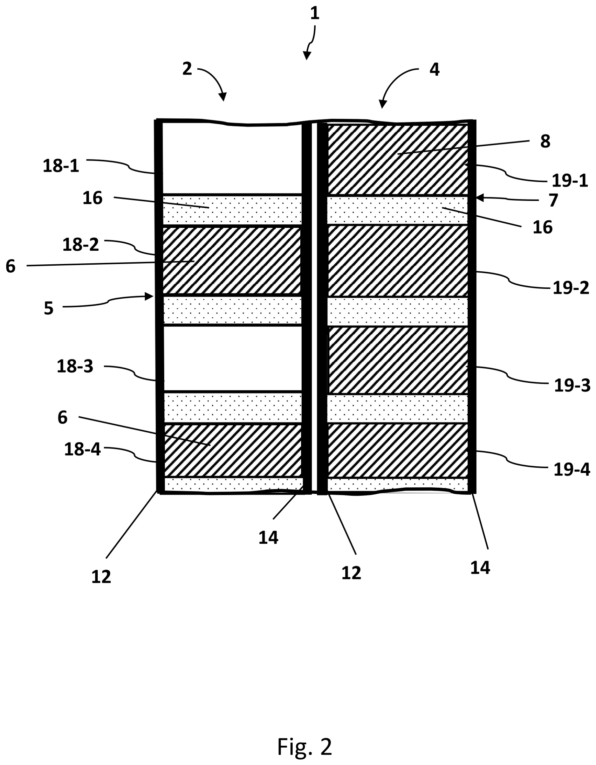

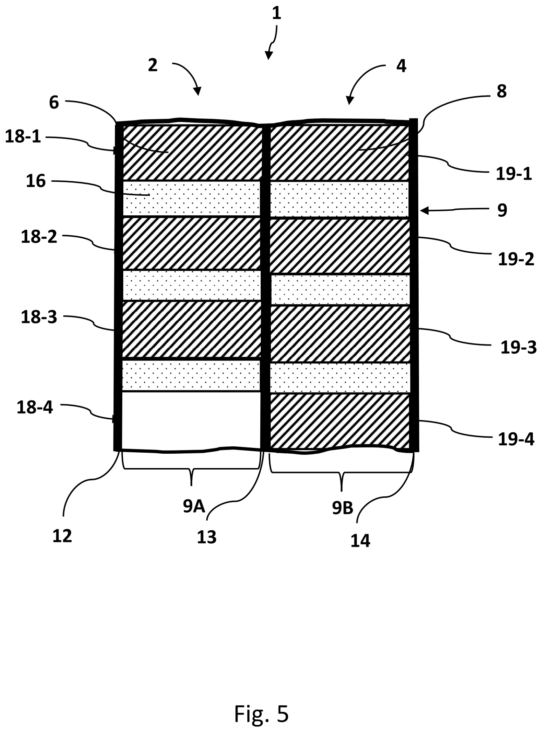

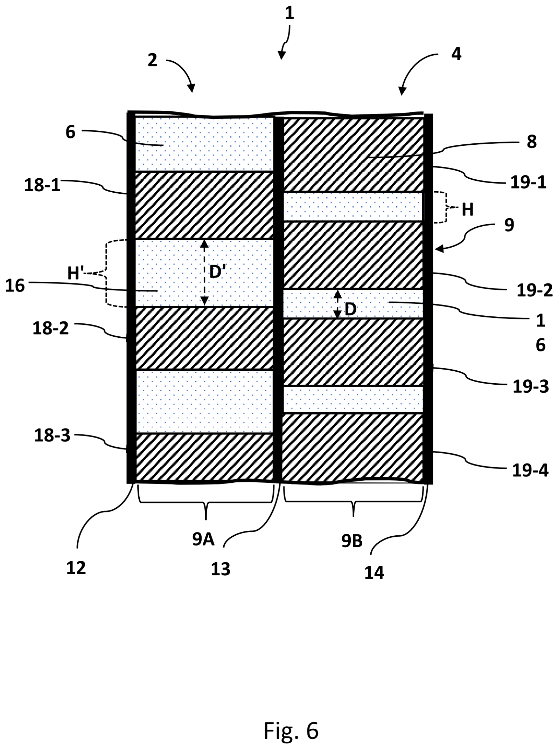

With reference to Figs. 2 to 6, different configurations of the cage will be described in the following. Figs. 2 to 4 show a cage configuration having two separate cages and Figs. 5 and 6 show a cage configuration having a single joined cage.

As shown in Fig. 2, the bearing 1 comprises two separate cages 5, 7. Both the first cage 5 and the second cage 7 comprise a first cage ring 12 and a second cage ring 14, wherein the second cage ring 14 is spaced apart from the first cage ring 12 in an axial direction, opposite to the first cage ring 12. Further, a plurality of cage bars 16 extends between the first cage ring 12 and the second cage ring 14, wherein the space between two adjacent cage bars 16 forms a pocket 18, 19.

As shown in Figs. 2 to 4, the first cage 5 guides and accommodates the first number of rolling elements 6 of the first set of rolling elements 2 and the second cage 7 guides and accommodates the second number of rolling elements 8 of the second set of rolling elements 4. The first number of pockets 18 in the first cage 5 accommodates the first number of rolling elements 6 and the second number of pockets 19 in the second cage 7 accommodates the second number of rolling elements 8.

As the first number of rolling elements 6 is different from the second number of rolling elements 8, the distribution of rolling elements in the pockets may also differ between the cages 5 and 7. The first cage 5 and the second cage 7 may comprise an identical number of pockets 18-1 to 18-4 and 19-1 to 19-4, respectively, as shown in Fig. 2.

In the first cage 5, the first number of rolling elements 6 can be randomly or evenly distributed in the first number of pockets 18-1 to 18-4. For instance, the first number of rolling elements 6 may be arranged at every second pocket 18-2 and 18-4 in the first cage 5, leaving the pockets 18-1 and 18-3 empty. On the other hand, in the second cage 7, each pocket 19-1, 19-2, 19-3 and 19-4 is filled with a rolling element 8 of the second set of rolling elements 4, as depicted in Fig.2.

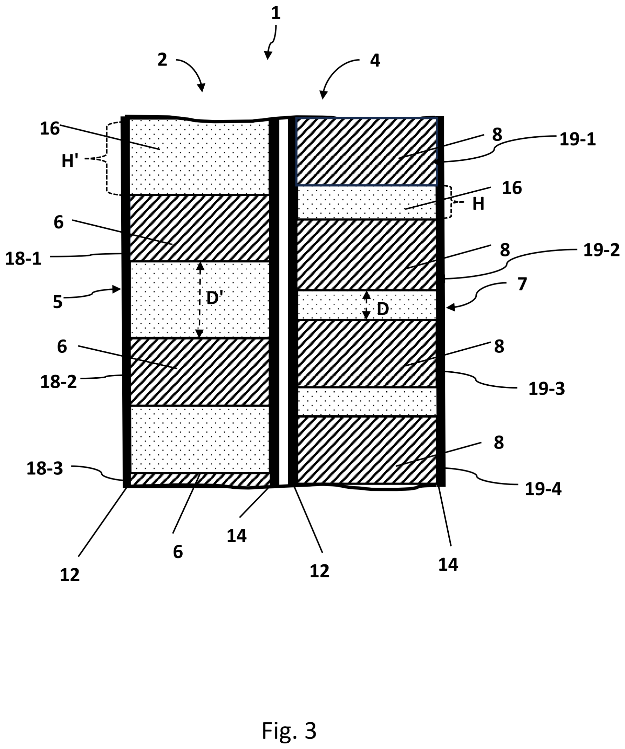

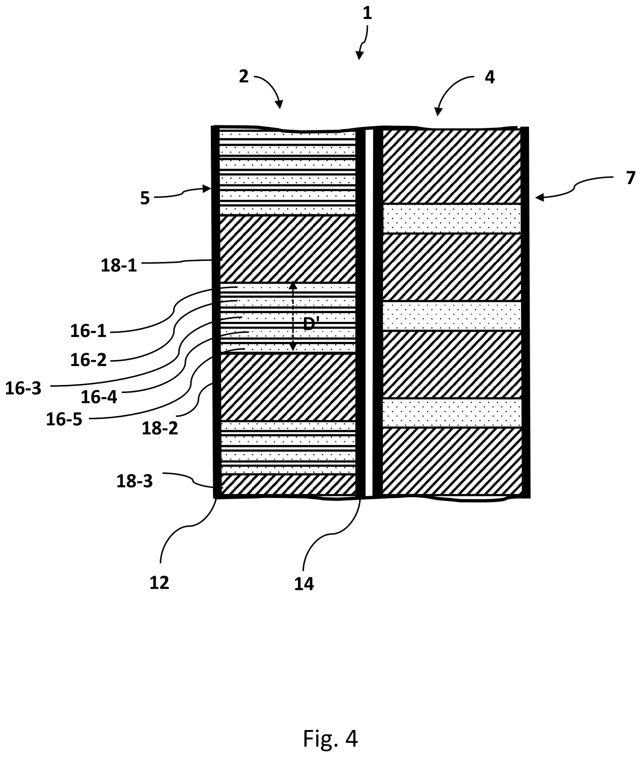

In another configuration as shown in Figs. 3 and 4, the first cage 5 and the second cage 7 may comprises a different number of pockets 18, 19. For example, the pockets 18-1 to 18-3 in the first cage 5 is not equal in number to the pockets 19-1 to 19-4 in the second cage 7, as shown in Fig. 3. In such cage, every pocket 18-1, 18-2, and 18-3 in the first cage 5 accommodates a rolling element 6 of the first set of rolling elements 2, as like in the second cage 7. Thus, cages 5 and 7 are configured with the number of pockets that is adapted to the number of rolling elements.

However, to adapt the number of pockets to the number of rolling elements, adjustments may be made to the configuration of the cage bars 16 in the cages 5 and 7. For example, the width and arrangement of the cage bars 16 may be modified to change the number of pockets formed in the cages 5 and 7.

As shown in Fig. 3, in the first cage 5, the cage bars 16 have a width H' that is higher than a width H of the cage bars 16 in the second cage 7. Thus, increasing the width H' of the cage bars 16 in the first cage 5 increases the distance D' between the adjacent pockets 18-1 and 18-2 compared to the distance D between the pockets 19-2 and 19-3 in the second cage 7. This results in fewer pockets 18-1 to 18-3 in the first cage 5 compared to the second cage 7 with pockets 19-1 to 19-4.

Alternatively, instead of increasing or reducing the width of the cage bars 16 to change the number of pockets formed, multiple cage bars may be arranged consecutively between the adjacent pockets in the first cage 5. For example, as shown in Fig. 4, the cage bars 16-1 to 16-5 are consecutively arranged between the adjacent pockets 18-1 and 18-2, which increases the distance D' between them, thereby reducing the number of pockets formed in the first cage 5.

Further, as shown in Figs. 2 to 4, the first cage 5 and the second cage 7 may be arranged separated but close to each other, thereby the first cage 5 and the second cage 7 can support each other while still able to have a relative movement.

As shown in Figs. 5 and 6, the bearing 1 comprises a single joint cage 9 for guiding and accommodating the rolling elements 6, 8 of both the first set of rolling elements 2 and the second set of rolling elements 4. The cage 9 comprises a first cage ring 12, a second cage ring 14 spaced apart from the first cage ring 12 in an axial direction, opposite to the first cage ring 12, and a third cage ring 13 being positioned along a central axis between the first cage ring 12 and the second cage rings 14. Thus, the third cage ring 13 splits the single joint cage 9 along the central axis into two cages 9A and 9B, wherein the first cage 9A is positioned between the first cage ring 12 and the third cage ring 13 and wherein the first cage 9B is between the second cage ring 14 and the third cage ring 13.

The cage 9A includes a plurality of cage bars 16 extending between the first cage ring 12 and the third cage ring 13, forming a number of pockets 18. The number of pockets 18 are configured to guide and accommodate the first number of rolling elements 6 of the first set of rolling elements 2. Similarly, a plurality of cage bars 16 extends between the second cage ring 14 and third cage ring 13, forming a number of pockets 19 in the cage 9B that are configured to guide and accommodate the second number of rolling elements 8 of the second set of rolling elements 4.

As explained above with reference to Figs. 2 to 4 and with respect to two separate cages, the distribution of rolling elements in the pockets may also vary between the two cages 9A and 9B, as the first and second sets of rolling elements 2 and 4 have different numbers of rolling elements 6 and 8, respectively.

As shown in Fig. 5, the cages 9A and 9B comprise an identical number of pockets, 18-1 to 18-4 and 19-1 to 19-4, respectively. This allows the first number of rolling elements 6 of the first set of rolling elements 2 to be distributed randomly or evenly in the first number of pockets 18-1 to 18-4. For instance, the first number of rolling elements 6 may be arranged in groups in the pockets 18-1 to 18-3, leaving the remaining pocket 18-4 empty in the cage 9A. In contrast to that, in the cage 9B each pocket receives a rolling element 8.

In another configuration, as shown in Fig. 6, the cages 9A and 9B comprise a different number of pockets 18-1 to 18-3 and 19-1 to 19-4, respectively. Thus, as shown, the cage 9A has fewer pockets 18-1 to 18-3 than the cage 9B. This allows each pocket 18-1 to 18-3 in the cage 9A to receive a rolling element 6 of the first set of rolling elements 2, similar to the cage 9B.

Further, as mentioned above, the space between two adjacent cage bars 16 forms a pocket 18. By adjusting the configuration of cage bars 16 in the cage 9A, the number of pockets formed within the cage 9A can be easily adapted based on the number of rolling elements 6.

Similar to the configuration having two separate cages 5 and 7, the width of the cage bars 16 of the sing joint cage 9 may be increased or reduced, or multiple cage bars 16 may be arranged between the two adjacent pockets to change the number of pockets formed in the cage 9A based on the first set of rolling elements 2.

For instance, as shown in Fig. 6 in the cage 9A, the width H' of the cage bars 16 is increased, which eventually increases the distance between two adjacent pockets 18-2 and 18-3. Thus, the pockets are formed at a distance D' allowing only three pockets 18-1 to 18-3 to be formed in the illustrated section of the cage 9A.

The rolling elements 6 in the cage 9A may be aligned relative to the rolling elements 8 in the cage 9B. Alternatively, the rolling elements 6, 8 may be offset from each other.

In summary, the multi-row rolling bearing 1 is provided with the first set of rolling elements 2 at its lower loaded side and the second set of rolling elements 4 at the higher loaded side, wherein the first set of rolling elements 2 comprises the first number of rolling elements 6 that is smaller than the second number of rolling elements 8 in the second set of rolling elements 4. Thus, by using only a number of the rolling elements being sufficient to support the lesser load on the lower loaded side, the material and manufacturing costs can be reduced while still ensuring that the bearing 1 can support the operational loads, such as both high loads and low loads.

### Reference numerals

- 1: multi row rolling bearing
- 2: first set of rolling elements
- 3: cage
- 4: second set of rolling elements
- 5: separate cage
- 6: first number of rolling elements
- 7: separate cage
- 8: second number of rolling elements
- 9: single joint cage
- 9A, 9B: first and second cage of single joint cage
- 10: inner ring
- 12: first cage ring
- 13: third cage ring
- 14: second cage ring
- 16: cage bars
- 18, 19: pockets
- H', H: width of the cage bars
- D', D: distance between the two adjacent pockets

## Claims

1. Multi-row rolling bearing comprising, at least,
an inner ring and an outer ring, wherein the inner ring and the outer ring form at least a first raceway and a second raceway, and
a first set of rolling elements arranged at the first raceway of the inner and the outer ring, and a second set of rolling elements arranged at the second raceway of the inner ring and outer ring,
**characterized in that**
the first set of rolling elements comprises a first number of rolling elements and the second set of rolling elements comprises a second number of rolling elements, wherein the first number of rolling elements is different from the second number of rolling elements.

2. Multi-row rolling bearing according to claim 1, wherein the bearing comprises a higher loaded side being configured to support a higher load capacity when in use and a lower loaded side being configured to support a lower load capacity when in use, wherein the higher loaded side receives a greater operational load compared to the lower loaded side, wherein the first set of rolling elements is arranged at the lower loaded side, and the second set of rolling elements is arranged at the higher loaded side, wherein the first number of rolling elements in the first set of rolling elements is smaller compared to the second number of rolling elements in the second set of rolling elements.

3. Multi-row rolling bearing according to claim 1 or 2, wherein the bearing comprises a first cage and a second cage, wherein each cage comprises one cage ring or a first cage ring and a second cage ring spaced apart from the first cage ring in an axial direction, and a plurality of cage bars extending from the one cage ring or between the first cage ring and the second cage ring and forming a number of pockets, wherein the first cage comprises a first number of pockets for guiding and accommodating the first number of rolling elements of the first set of rolling elements and the second cage comprises a second number of pockets for guiding and accommodating the second number of rolling elements of the second set of rolling elements.

4. Multi-row rolling bearing according to claim 3, wherein the first number of pockets is identical to the second number of pockets, wherein the first number of rolling elements of the first set of the rolling elements is different from the first number of pockets in the first cage, wherein the second number of rolling elements of the second set of rolling elements is equal to the second number of pockets in the second cage.

5. Multi-row rolling bearing according to claim 4, wherein the first number of rolling elements of the first set of rolling elements is distributed across the first number of pockets in the first cage so that some of the pockets are empty, wherein preferably the first number of rolling elements of the first set of rolling elements is evenly distributed across the first number of pockets in the first cage.

6. Multi-row rolling bearing according to claim 3, wherein the first number of pockets is different from the second number of pockets, wherein preferably every pocket of the first cage accommodates a rolling element of the first number of rolling elements of the first set of rolling elements.

7. Multi-row rolling bearing according to claim 6, wherein the width of the cage bars of the first cage is different from the width of the cage bars of the second cage.

8. Multi-row rolling bearing according to claim 6 or 7, wherein the first cage comprises a plurality of cage bars between two adjacent pockets.

9. Multi-row rolling bearing according to claim 1 or 2, wherein the bearing comprises a joint cage for guiding and accommodating the rolling elements of both the first set and the second set of rolling elements,
wherein the cage comprises a first cage ring, a second cage ring spaced apart from the first cage ring in an axial direction, a third cage ring positioned along a central axis between the first and second cage rings, a plurality of cage bars extends between the first and third cage rings, forming a first number of pockets for guiding and accommodating the first set of rolling elements, and a plurality of cage bars extends between the second and third cage ring, forming a second number of pockets for guiding and accommodating the second set of rolling elements, or
wherein the cage comprises a third cage ring positioned along a central axis between the first and the second set of rolling elements, wherein a plurality of cage bars extends from the third cage ring forming a first number of pockets for guiding and accommodating the first set of rolling elements, and a plurality of cage bars extends from the third cage ring, forming a second number of pockets for guiding and accommodating the second set of rolling elements.

10. Multi-row rolling bearing according to claim 9, wherein the first number of pockets is identical to the second number of pockets, wherein the first number of rolling elements of the first set of rolling elements is different from the first number of pockets, wherein the second number of rolling elements of the second set of rolling elements is equal to the second number of pockets.

11. Multi-row rolling bearing according to claim 10, wherein the first number of rolling elements of the first set of rolling elements is distributed across the first number of pockets so that some of the pockets are empty, wherein preferably the first number of rolling elements of the first set of rolling elements is evenly distributed across the first number of pockets.

12. Multi-row rolling bearing according to claim 9, wherein the first number of pockets is different from the second number of pockets, wherein preferably every pocket of the first number of pockets accommodates a rolling element of the first number of rolling elements of the first set of rolling elements.

13. Multi-row rolling bearing according to claim 12, wherein the width of the cage bars between the first number of pockets is different from the width of the cage bars between the second number of pockets.

14. Multi-row rolling bearing according to claim 12, wherein a plurality of cage bars is provided between adjacent pockets of the first number of pockets.

15. Bearing arrangement for a wind turbine, wherein the bearing arrangement comprises a multi-row rolling bearing according to claims 1 to 14.
